(19) Europäisches Patentamt
European Patent Office
Office européen des brevets

(11) Veröffentlichungsnummer: **0 212 113 B1**

(12) **EUROPÄISCHE PATENTSCHRIFT**

(45) Veröffentlichungstag der Patentschrift: **11.11.92**

(51) Int. Cl.5: **H04B 7/26**

(21) Anmeldenummer: **86107909.3**

(22) Anmeldetag: **10.06.86**

(54) **Funktelefonnetz für ein in Funkzellen aufgeteiltes Funkgebiet.**

(30) Priorität: **13.08.85 DE 3528974**

(43) Veröffentlichungstag der Anmeldung:
**04.03.87 Patentblatt 87/10**

(45) Bekanntmachung des Hinweises auf die
Patenterteilung:
**11.11.92 Patentblatt 92/46**

(84) Benannte Vertragsstaaten:
**AT BE CH DE FR GB IT LI LU NL SE**

(56) Entgegenhaltungen:

**MICROWAVE JOURNAL, Band 26, Nr. 8, August 1983, Seiten 119-121,124-126, Dedham, Massachusetts, US; N. EHRLICH: "Advanced mobil phone service using cellular technology"**

**BRITISH TELECOMMUNICATIONS ENGINEERING, Band 4, Teil 2, Juli 1985, Seiten 62-69, London, GB; M.S. APPLEBY et al.: "The cellnet cellular radio network"**

**W.C. JAKES, Jr.: "Microwave mobile communications", 1974, Seiten 562-569, John Wiley & Sons, North Andover, US**

(73) Patentinhaber: **ROBERT BOSCH GMBH
Postfach 30 02 20
W-7000 Stuttgart 30(DE)**

(72) Erfinder: **Ketterling, Hans-Peter, Dipl.-Ing.
Manfred-von-Richthofen-Strasse 11
W-1000 Berlin 42(DE)**

(74) Vertreter: **Schmidt, Hans-Ekhardt
Robert Bosch GmbH Geschäftsbereich Elektronik Patent- und Lizenzabteilung Forckenbeckstrasse 9-13
W-1000 Berlin 33(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

# Beschreibung

## Stand der Technik

Die Erfindung geht von einem Funktelefonnetz nach der Gattung der unabhängigen Ansprüche 1 und 2 aus.

Derartige Funktelefonnetze sind bekannt (Funkspiegel, 1985, Heft 1, Seiten 14 bis 16). Dabei ist die gesamte räumliche Netz- und Frequenzplanung solange unproblematisch, wie von einer regelmäßigen Anordnung gleich großer Funkzellen ausgegangen werden kann. Dann muß nur noch für die Funkkanäle ein geeignetes Wiederholungsschema gefunden werden, das die Wiederbenutzung der einzelnen Funkkanäle in einem gewissen räumlichen Abstand gestattet. Weist das Funktelefonnetz ein verhältnismäßig geringes Verkaufsaufkommen auf, so werden die Funkzellen aus Gründen der Wirtschaftlichkeit so groß wie möglich gemacht. In Ballungsgebieten kann jedoch das Verkehrsaufkommen unter Umständen derart ansteigen, daß man zu dessen Bewältigung den Radius der Funkzellen erheblich verringern muß.

Durch den Übergang von großen Funkzellen auf kleine Funkzellen ergeben sich zwei Aufgaben. Einerseits muß eine nachträgliche Verkleinerung der Funkzellen möglich sein, wenn man in Gebieten mit steigender Verkehrsdichte eine Kapazitätsanpassung vornehmen muß, weil das bestehende Funktelefonnetz bereits vollständig ausgelastet ist. Andererseits muß bei den räumlichen Nebeneinander von großen und kleinen Funkzellen das Problem einer geeigneten Frequenzverteilung und Wahl der zellspezifisch maximalen Sendeleistung derart gelöst werden, daß kritische Gleichkanalstörungen vermieden werden.

Aus der Zeitschrift "Microwave Journal", Vol. 26 (1983), August, No. 8, Seiten 119 bis 126, ist ein Funktelefonnetz bekannt, bei dem bei hoher Verkehrsdichte zwischen den vorhandenen Funkzellen neue Funkzellen eingefügt werden, die halb so groß wie die vorhandenen Funkzellen sind und die in der Mitte zwischen den vorhandenen Funkzellen liegen.

## Aufgabe der Erfindung

Der Erfindung liegt die Aufgabe zugrunde, bei einem Funktelefonnetz gemäß der Gattung des Anspruchs 1 eine Aufteilung von Teilen des Funknetzes in kleinere Funkzellen, im folgenden Funkkleinzellen genannt, derart vorzunehmen, daß dadurch verursachte Gleichkanalstörungen nicht stärker in Erscheinung treten.

## Vorteile der Erfindung

Das erfindungsgemäße Funktelefonnetz mit den kennzeichnenden Merkmalen der Ansprüche 1 und 2 hat den Vorteil, daß trotz der Aufteilung einzelner Funkzellen in Funkkleinzellen die Gleichkanalstörungen kaum stärker sind als bei einem Funktelefonnetz mit normalen Funkzellen.

Durch die in den Unteransprüchen aufgeführten Maßnahmen ist eine besonders vorteilhafte Ausgestaltung der Erfindung bei einem Funktelefonnetz möglich, indem mindestens eine Funkzelle eines Funkzellenbündels in eine zentrale Funkkleinzelle und mehrere periphere Funkkleinzellen aufgeteilt ist, das Zentrum der zentralen Funkkleinzelle dem Zentrum der aufgeteilten Funkzelle entspricht und die Zentren der peripheren kleinen Funkzellen in Eckpunkten ihrer unmittelbar benachten Funkzellen angeordnet sind.

## Zeichnung

Ausführungsbeispiele der Erfindung werden in der Zeichnung an Hand mehrerer Figuren dargestellt und in der nachfolgenden Beschreibung näher erläutert. Die Zeichnung zeigt in

Fig. 1 einen Ausschnitt aus einem Funktelefonnetz, das in bekannter Weise in Funkzellenbündel aufgeteilt ist,

Fig. 2 einen Ausschnitt aus einem erfindungsgemäßen Funktelefonnetz, bei dem eine Funkzelle eines Funkzellenbündels in Funkkleinzellen aufgeteilt ist,

Fig. 3 ein Funkzellenbündel mit Funkkleinzellen in vergrößertem Maßstab,

Fig. 4 ein Funkzellenbündel mit vier Funkzellen und zwei Funkkleinzellen und

Fig. 5 den Kurvenverlauf der Empfangsfeldstärken in Abhängigkeit von der Entfernung zu den ortsfesten Funkstationen.

## Beschreibung der Erfindung

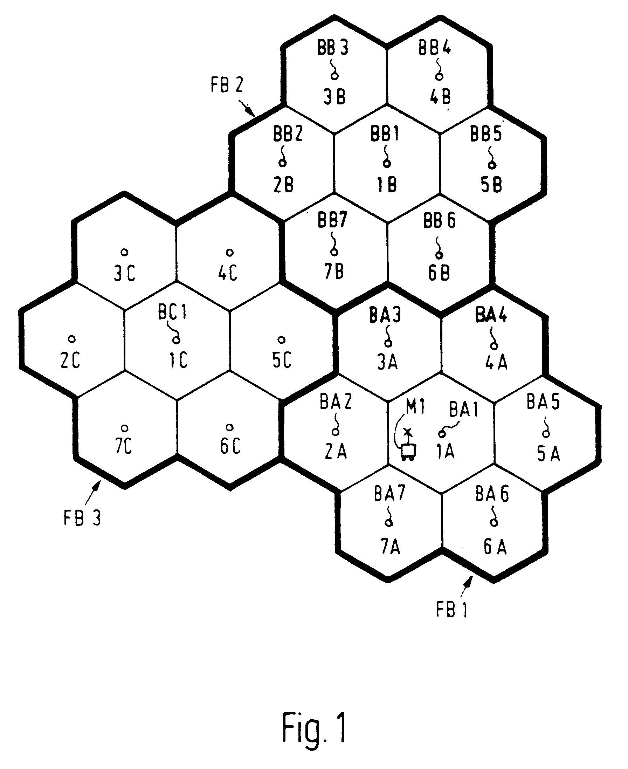

In Fig. 1 ist ein Ausschnitt aus einem Funkgebiet gezeigt, das zu einem Funktelefonnetz gehört. Das Funkgebiet ist in eine Vielzahl von zum Beispiel sechseckigen Funkzellen 1A ... 7A, 1 B ... 7B, 1C ... 7C usw. aufgeteilt. Jede Funkzelle weist vorzugsweise in ihrem Zentrum eine ortsfeste Funksende- und -empfangsstation BA1 ... BA7, BB1 ... BB7, BC1 ... BB7 auf, die im folgenden ortsfeste Funkstation genannt ist.

Je sieben Funkzellen sind zu einem Funkzellenbündel FB1, FB2, FB3 ... zusammengefaßt. Die Funkkanäle der sieben Funkzellen sind in den Funkzellenbündeln derart verteilt angeordnet, daß zwischen Funkzellen mit gleichem Funkkanal ein bestimmter geographischer Mindestabstand besteht. Innerhalb des Funkgebietes operieren mobile Funksende- und -empfangsstationen M1, die mit den in ihrem Sende- bzw. Empfangsbereich liegenden ortsfesten Funkstationen BA1 ... in Verbindung treten können.

Die in Fig. 1 dargestellte symmetrische Anordnung der Funkzellen und Funkzellenbündel ist für ein bestimmtes maximales Verkehrsaufkommen konzipiert. Nimmt das Verkehrsaufkommen darüber hinaus zu, dann kommt es zu Überlastungen des Funktelefonnetzes.

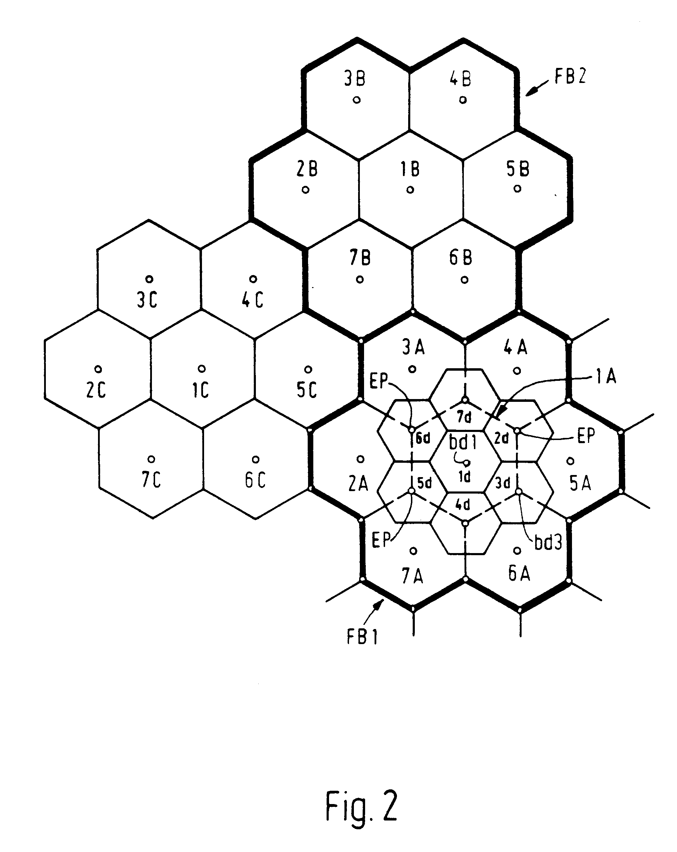

Nach Fig. 2 wird deshalb in dem Funktelefonnetz beispielsweise die Funkzelle 1A - in der Fig. 2 gestrichelt angedeutet - in sieben Funkkleinzellen 1d ... 7d aufgeteilt. Während die Funkzelle 1A auf die Größe der Funkkleinzelle 1d reduziert wird, entsteht um die Funkkleinzelle 1d herum ein Ring von peripheren Funkkleinzellen 2d ... 7d, der die Grenzen der Funkzellen 2A ... 7A überschreitet.

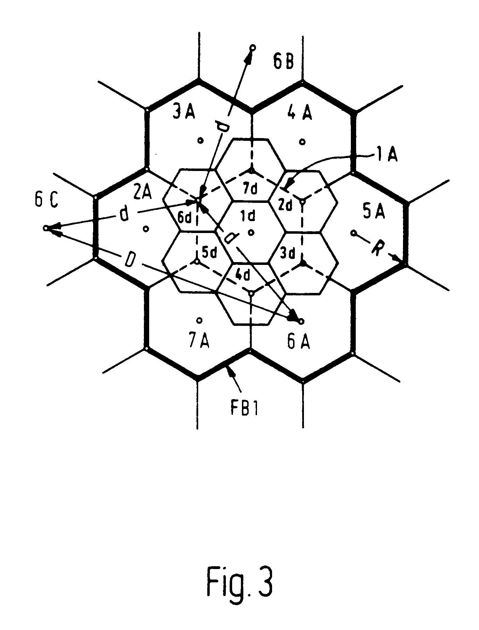

Aus Fig. 3, die das Funkzellenbündel FB1 gemäß Fig. 2 in vergrößertem Maßstab zeigt, geht hervor, daß zum Beispiel für die Funkkleinzelle 6d der kritische räumliche Gleichkanalabstand d zu allen anderen Funkzellen mit der Kennziffer 6, wie zum Beispiel 6A, 6B, 6C, gleich groß ist. Weiterhin reduziert sich der andernfalls vorhandene Gleichkanalabstand D zwischen zwei Funkzellen gleicher Kennziffer zum Beispiel 6A - 6C, von D = 4,58 R auf d = 2,65 R, so daß sich ein Verhältnis von D/d = 1,73 ergibt, wobei R der halben Diagonale einer Funkzelle, zum Beispiel 5A, entspricht.

Der Abstand zwischen dem Zentrum einer Funkkleinzelle, zum Beispiel 2d, und einem ihrer Eckpunkte ep ist vorzugsweise halb so groß wie der Abstand R des Zentrums einer Funkzelle, zum Beispiel 5A, und einem ihrer Eckpunkte EP.

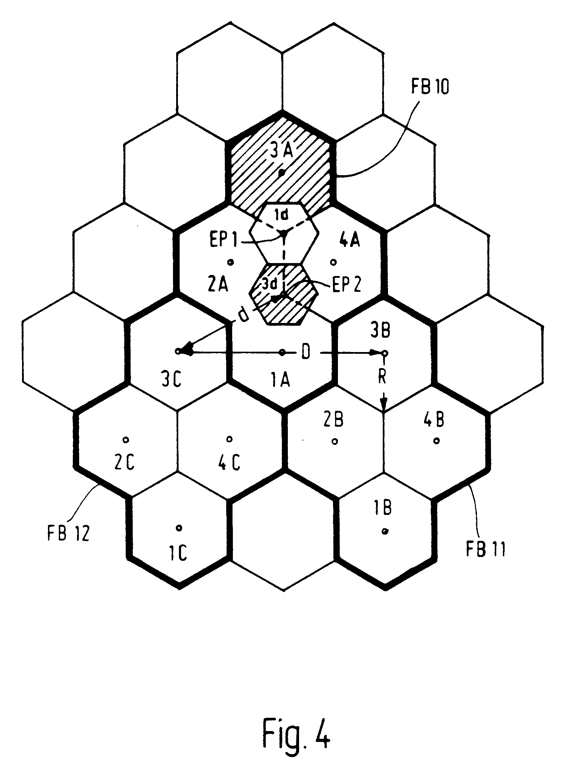

Ein Funkgebiet nach Fig. 4 geht von Funkzellenbündeln FB10, FB11, FB12 mit je vier Funkzellen 1A ... 4A aus. Dabei bleibt das Verhältnis der Gleichkanalabstände D/d = 1,73 bzw. $\sqrt{3}$ erhalten, wenn die Funkkleinzellen 1d und 3d mit ihren Zentren wieder in je einem Eckpunkt, zum Beispiel EP1, EP2, der unmittelbar benachbarten Funkzellen, zum Beispiel 1A ... 4A, liegen.

Diese Verringerung der Gleichkanalabstände von D auf d könnte kritisch werden, sofern die Sendeleistungen unverändert bleiben. In den Funkkleinzellen 1d, 3d kann man jedoch mit reduzierter Leistung arbeiten. Da bei dem hier betrachteten Fall der Radius R der Funkzellen 1A ... halbiert wird, am Funkzellrand jedoch aus Gründen der Relation zur Empfängerempfindlichkeit immer mindestens die gleiche Feldstärke $E_o$ benötigt wird, genügt zur normalen Versorgung der Funkkleinzellen ein Viertel der sonst benötigten Leistung.

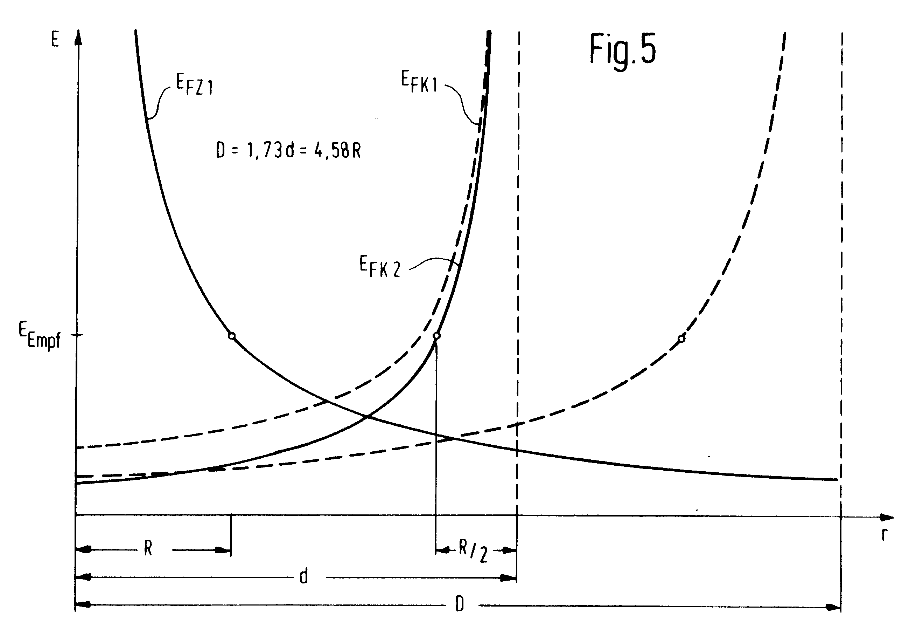

Die Feldstärkeverteilung für ein Funkgebiet nach Fig. 3 ist in Fig. 5 gezeigt. Darin bedeuten E die Empfangsfeldstärke und r der Abstand. Der Kurvenverlauf $E_{FZ1}$ entspricht der Empfangsfeldstärke in Abhängigkeit von der Entfernung zu einer ersten ortsfesten Funkstation einer Funkzelle, zum Beispiel 6C. Analog dazu entspricht der gestrichelt eingezeichnete Kurvenverlauf $E_{FE2}$ der Empfangfeldstärke in Abhängigkeit von der Entfernung zu einer zweiten ortsfesten Funkstation einer Funkzelle, zum Beispiel 6A, gleicher Sendefrequenz. An den relevanten Zellgrenzen, das heißt im Abstand R von der betreffenden Funkstation der Funkzelle, herrscht eine Empfangsfeldstärke $E_{Empf}$.

Wird nun eine Aufteilung in Funkkleinzellen 1d, 2d ... vorgenommen, so gilt für diese der Kurvenverlauf $E_{FK1}$ (gestrichelte Kurve) bei angenommener normaler Sendeleistung und der Kurvenverlauf $E_{FK2}$ bei um etwa ein Viertel verringerter Sendeleistung.

## Patentansprüche

1. Funktelefonnetz für ein in Funkzellen aufgeteiltes Funkgebiet mit darin operierenden mobilen Funktelefonen, wobei je eine beliebige Zahl unmittelbar aneinandergrenzender mehreckiger Funkzellen (1A...7A, 1B...7B) mit je einer zentralen ortsfesten Funkstation (BA1...BA7, BB1...BB7) zu einem Funkzellenbündel (FB1) zusammengefaßt sind und die Frequenzen der einzelnen ortsfesten Funkstationen eines Funkzellenbündels verschieden, in allen Funkzellenbündeln dagegen gleich sind, **dadurch gekennzeichnet,** daß innerhalb eines Funkzellenbündels (FB1) mindestens zwei unmittelbar benachbarte Funkkleinzellen (1d, 2d) mit je einer zentralen ortsfesten Funkstation (bd1, bd2) geringerer Leistung gebildet sind, daß die Funkkleinzellen derart angeordnet sind, daß sich größtmögliche, gleich große Abstände (d) zu ortsfesten Funkstationen gleicher Frequenz (bd6 - BD6) ergeben, und daß die Zentren der Funkkleinzellen (1d, 3d) in Eckpunkten (EP1, EP2) ihrer unmittelbar benachbarten Funkzellen (1A, 3A) angeordnet sind.

2. Funktelefonnetz für ein in Funkzellen aufgeteiltes Funkgebiet mit darin operierenden mobilen Funktelefonen, wobei je eine beliebige Zahl unmittelbar aneinandergrenzender mehreckiger Funkzellen (1A...7A, 1B...7B) mit je einer zentralen ortsfesten Funkstation (BA1...BA7, BB1...BB7) zu einem Funkzellenbündel (FB1) zusammengefaßt sind und die Frequenzen der einzelnen ortsfesten Funkstationen eines Funkzellenbündels verschieden, in allen Funkzellenbündeln dagegen gleich sind, **dadurch gekennzeichnet,** daß innerhalb eines Funkzellenbündels (FB1) mindestens zwei unmittelbar benachbarte Funkkleinzellen (1d, 2d) mit je einer zentralen ortsfesten Funkstation (bd1, bd2) geringerer Leistung gebildet sind, daß die Funkkleinzellen derart angeordnet sind, daß sich größtmögliche, gleich große Abstände (d) zu ortsfesten Funkstationen gleicher Frequenz (bd6 - BC6) ergeben, daß mindestens eine Funkzelle (1A) eines Funkzellenbündels (FB1) in eine zentrale Funkkleinzelle (1d) und mehrere periphere Funkkleinzellen (2d, 3d ...) aufgeteilt ist, daß das Zentrum der zentralen Funkkleinzellen (1d) dem Zentrum der aufgeteilten Funkzelle (1A) entspricht und daß die Zentren der peripheren Funkkleinzellen (2d, 3d ...) in Eckpunkten (EP1) ihrer unmittelbar benachbarten Funkzellen (2A, 3A ...) angeordnet sind.

3. Funktelefonnetz nach Anspruch 1 oder 2, dadurch gekennzeichnet, daß der Abstand zwischen dem Zentrum einer Funkkleinzelle (1d) und einem ihrer Eckpunkte (ep) etwa halb so groß ist wie der Abstand (R) des Zentrums einer Funkzelle (1A) und einem ihrer Eckpunkte (EP1) und daß die Sendeleistung der Funkstationen (bd1) der Funkkleinzellen (1d) etwa einem Viertel der Sendeleistung der ortsfesten Funkstationen der Funkzellen (1A) beträgt.

## Claims

1. A radio-telephonic network for a radio area divided into radio cells, the radio area having mobile radio telephones operating within the area, and in each case any desired number of directly adjoining polygonal radio cells (1A...7A, 1B...7B) each having a central fixed radio station (BA1...BA7, BB1...BB7) are amalgamated to form a bundle (FBB1) of radio cells and the frequencies of the individual fixed radio stations of a bundle of radio cells are different, whereas they are identical in all the bundles of radio cells characterised in that, within one bundle (FB1) of radio cells at least two directly adjacent small radio cells (1d, 2d) are each designed with a central fixed radio station (bd1, bd2) of lower output, that the small radio cells are disposed in such a way that the largest possible distances (d), which are identical in size to the fixed radio stations of the same frequency (bd6-BD6), are produced and that the centres of the small radio cells (1d, 3d) are disposed in the corner points (EP1, EP2) of their directly adjacent radio cells (1A, 3A).

2. A radio-telephonic network for a radio area divided into radio cells, the radio area having mobile radio telephones operating within the area and in each case any desired number of directly adjoining polygonal radio cells (1A...7A, 1B...7B) each having a central fixed radio station (BA1...BA7, BB1...BB7) are amalgamated to form a bundle (FB1) of radio cells and the frequencies of the individual fixed radio stations of a bundle of radio cells are different, whereas the frequencies are identical in all the bundles of radio cells, characterised in that within a bundle (FB1) of radio cells at least two directly adjacent small radio cells (1d, 2d) are formed each having a central fixed radio station (bd1, bd2) of lower output, that the small radio cells are disposed in such a way that the largest possible distances (d), which are identical in size to the fixed radio stations of the same frequency (bd6 - BC6), are produced, that at least one radio cell (1A) of a bundle (FB1) of radio cells is divided into a central small radio cell (1d) and several peripheral small radio cells (2d, 3d...), that the centre of the central small radio cells (1d) corresponds to the centre of the divided radio cell (1A) and that the centres of the peripheral small radio cells (2d, 3d...) are disposed in the corner points (EP1) of their directly adjacent radio cells (2A, 3A...).

3. A radio-telephonic network as claimed in claims 1 or 2, characterised in that the distance between the centre of a small radio cell (1d) and one of its corner points (ep) is approximately half as large as the distance (R) between the centre of a radio cell (1A) and one of its corner points (EP1) and that the transmission output of the radio stations (bd1) of the small radio cells (1d) amounts to approximately a quarter of the transmission output of the fixed radio stations (1A).

## Revendications

1. Réseau de radio-téléphone pour un domaine radio subdivisé en cellules radio dans lequel opèrent des radios-téléphones mobiles, avec un nombre quelconque de cellules radio polygonales adjacentes, avec un poste radio central fixe (BA1 ... BA7 ; BB1 ... BB7 ... ; 1A ... 7A, 1B ... 7B), ces cellules étant réunies en un faisceau de cellules radio et la fréquence des différents postes radio fixes d'un faisceau de cellules radio étant différente, alors que ces fréquences sont les mêmes dans tous les faisceaux de cellules radio, réseau caractérisé en ce qu'à l'intérieur d'un faisceau de cellules radio (FB1), on au moins deux petites cellules radio (1d, 2d) directement adjacentes avec chaque fois un poste radio central fixe (bd1, bd2), de puissance plus faible, les petites cellules radio étant disposées de façon à obtenir les distances (d) identiques, les plus grandes possibles par rapport aux postes radio fixes de même fréquence (bd6-BS6) et que le centre des petites cellules radio (1d, 3d) se trouve aux sommets (EP1, EP2) des cellules radio (1a, 3a) directement voisines.

2. Réseau de radio téléphone pour un domaine radio subdivisé en cellules radio dans lesquelles opèrent des radio téléphones mobiles, un nombre quelconque de cellules radio (1A ... 7A ; 1B ... 7B), polygonales, directement adjacentes étant réunies en un faisceau de cellules radio (FB1) avec chaque fois un poste radio central fixe (BA1 ... BA7 ; BB1 ... BB7) et la fréquence des différents postes radio fixes d'un même faisceau de cellules radio étant différente alors que dans tous les faisceaux de cellules radio, ces fréquences sont identiques, réseau caractérisé en ce qu'à l'intérieur d'un faisceau de cellules radio (FB1), on a au moins deux petites cellules radio (1d, 2d) directement adjacentes avec chaque fois un poste radio central fixe (bd1, bd2) de puissance plus faible, les petites cellules radio étant réparties de façon à obtenir des distances identiques (d), aussi grandes que possible par rapport aux postes radio fixes de même fréquence (bd6-BC6), en ce qu'au moins une cellule radio (1A) d'un faisceau de cellules radio (FB1) est subdivisée en une petite cellule radio centrale (1d) et plusieurs petites cellules radio périphériques (2d, 3d ...), le centre de la petite cellule radio centrale (1d) étant le centre de la cellule radio (1A) subdivisée et en ce que le centre des petites cellules radio périphériques (2d, 3d ...) correspond aux sommets (EP1) des cellules radio (2A, 3A ...) directement voisines.

3. Réseau de radio téléphone selon les revendications 1 ou 2, caractérisé en ce que la distance entre le centre d'une petite cellule radio (1d) et l'un de ses sommets (ep) est moitié de la distance (R) entre le centre d'une cellule radio (1A) et l'une de ses sommets (EP1) et en ce que la puissance d'émission des postes radio (bd1) des petites cellules radio (1d) correspond sensiblement à un quart de la puissance d'émission des postes radio fixes des cellules radio (1A).

Fig. 1

EP 0 212 113 B1

Fig. 2

7

Fig. 3

Fig. 4

Fig.5

$D = 1{,}73\,d = 4{,}58\,R$

$E_{FZ1}$

$E_{FK1}$

$E_{FK2}$

E

$E_{Empf}$

r

R

R/2

d

D

EP 0 212 113 B1